# EUROPEAN PATENT APPLICATION

(11) **EP 4 570 338 A1**
(43) Date of publication of application: **18.06.2025**
(21) Application number: 24218607.0
(22) Date of filing: 10.12.2024
(51) Int. Cl.: A63F 13/54, A63F 13/60

(54) **METHOD FOR ADJUSTING AN AUDIO MIX OF A VIDEO GAME**

(30) Priority: 11.12.2023 GB 202318870
(71) Applicant: Sony Interactive Entertainment Europe Limited, London W1F 7LP (GB)
(72) Inventor: COUTHIER, Loic, London, W1F 7LP (GB)
(74) Representative: Gill Jennings & Every LLP

(57) **Abstract**

There is provided a method for adjusting an audio mix of a video game, the method comprises: obtaining an audio mix of a video game, wherein the audio mix comprises at least one audio signal; obtaining game state information; obtaining audio mix information, wherein the audio mix information comprises a dynamic range of the audio mix; and adjusting the dynamic range of the audio mix based on the game state information and the audio mix information. In this way, the present invention may adjust the audio mix of the video game to avoid a player experiencing fatigue.

## Description

### FIELD OF THE INVENTION

The present invention relates to the field of audio mixing. In particular, the invention relates to adjusting audio mixes of video games.

### BACKGROUND

Sound design and music is a fundamental component of video games which enhances immersion, storytelling, atmosphere, and gameplay. An audio mix heard by a player will normally include many different elements (such as music, sound effects, dialogue, and ambient sounds) which have been adjusted to ensure they can be heard correctly (e.g. none are too loud or too quiet) and the intended audio experience is provided. These audio mixes, and their dynamic ranges, tend to vary a lot in in video games, for example during different gameplay contexts. The audio mixes of other media such as films often have large variations in their dynamic range, this is also sought after in video games as having large variations in the dynamic range helps enable the gameplay experience to be varied significantly.

However, if a gameplay context remains the same over a long period of time, for example in a combat state for over 5-10 minutes, the long-term dynamic range will be held in the louder ranges. These situations can become fatiguing for the listener, and even require them to turn down the volume as a result. This also leads to the opposite issue when the gameplay context changes and audio levels return to their normal averages - in this case the quiet levels will not be perceivable without a volume boost.

It is apparent there is a need to provide audio mixes for video games which avoid these problems.

### SUMMARY OF INVENTION

In a first aspect of the invention, there is provided a method for adjusting an audio mix of a video game, the method comprises: obtaining an audio mix of a video game, wherein the audio mix comprises at least one audio signal; obtaining game state information; obtaining audio mix information, wherein the audio mix information comprises a dynamic range of the audio mix; and adjusting the dynamic range of the audio mix based on the game state information and the audio mix information.

The audio mix of a video game refers to the audio output by a video game system and heard by a listener as the game is played. At a given time, the audio mix may comprise a single audio signal or a plurality of different audio signals which are mixed and output together. Video game audio mixes may be dynamic with audio signals being added and removed from the mix depending on the state of the video game.

An audio signal is a digital representation of sound and may be an audio element or an audio bus comprising a plurality of audio elements in a group. Examples of types of audio elements include but are not limited to sound effects, music, dialogue, diegetic and non-diegetic sounds.

Game state information refers to information about the state of the video game currently running. This may be context information, such as whether the context of the video game. For example, whether the current context of the video game is a combat state, a dialogue state, an exploration state, a puzzle state and so on. The game state information may also include information relating to previous player inputs, such as the type and frequency of the input.

By adjusting the dynamic range of the audio mix based on the game state information and the audio mix information, the present invention may adjust the audio mix of the video game to avoid a player experiencing fatigue. Furthermore, the present methods ensure a high-quality audio listening experience for the player regardless of how they interact with the video game. Adjusting the dynamic range of the audio mix in this way also helps to prevent audio output devices, such as headphones and speakers, from being damaged and/or distorting the audio mix.

For example, by adjusting the dynamic range of the audio mix such that the volume of louder audio elements is reduced, preventing them being played for an extended period of time and damaging the output device.

The method is a computer-implemented method for adjusting an audio mix of a video game.

Preferably, the audio mix is adjusted at run-time, i.e. in real-time during gameplay, meaning the audio mix is only adjusted when required to avoid player fatigue or to improve the audio experience without unnecessarily using processing resources.

Optionally, the audio signal may be an audio element; wherein the audio mix information comprises a dynamic range of the audio element; and wherein adjusting the dynamic range of the audio mix comprises adjusting the dynamic range of the audio element. This may mean the audio mix comprises only a single audio signal which is itself a single audio element (i.e. no other audio elements or sounds are present in the current audio mix), and the dynamic range of that single audio element is adjusted. However, in some scenarios the audio mix may comprise other audio signals which may or may not be adjusted. Adjusting specific audio elements allows a fine degree of tuning of the audio mix to facilitate the output of a high-quality audio mix.

Optionally, the audio signal is an audio bus, the audio bus comprising a plurality of audio elements; wherein the audio mix information comprises a dynamic range of the audio bus; and wherein adjusting the dynamic range of the audio mix comprises adjusting the dynamic range of the audio bus. This may mean the audio mix comprises only a single audio signal which is itself a single audio bus (i.e. no other audio elements outside of the audio bus are present in the current audio mix) and the dynamic range of that single audio bus is adjusted. However, in some scenarios the audio mix may comprise other audio signals which may or may not be adjusted.

As the audio bus comprises a plurality of audio elements, adjusting the dynamic range of the audio bus means the dynamic range of audio elements within the audio bus will be adjusted together in the same manner as each other. This is particularly beneficial to reduce the required processing when similar audio elements can be grouped together, such as the footsteps of different characters in a video game.

Optionally, the audio mix may comprise M audio signals, where M is an integer greater than 1; and wherein adjusting the dynamic range of the audio mix comprises selecting N audio signals, wherein N is an integer from 1 to M-1, and adjusting the selected audio signals. Alternatively, each of the M audio signals may be selected and adjusted. In either option, the selected audio signals may be adjusted uniformly or differently.

Obtaining the audio mix information may comprise analysing the audio mix to determine the dynamic range of the audio mix. For example, by analysing the waveform of the audio mix or an audio signal of the audio mix. Alternatively, the audio mix information may be obtained from identification information of the audio mix such as metadata associated with the audio mix and/or a signal of the audio mix. The audio mix information may also be obtained through a combination of analysis of the audio mix and directly from identification information, for example where identification information is available for some audio signals but not all.

The audio mix information may comprise audio context information of the audio mix. The audio context information may describe the context of the audio mix as a whole, or a signal or element of the mix. This audio context information may include information classifying the audio such as whether it is music, dialogue, sound effects, combat, ambient, diegetic, non-diegetic and so on. The audio context information may also describe the intensity of the associated audio mix/signal/element. In this way, the audio context information helps determine how much to adjust the dynamic range of the audio mix without negatively affecting the listening experience.

The audio mix information may further comprise a period of time the audio mix has been playing, and/or the period of time an audio signal of the audio mix has been playing. As audio mixes of video games are often generative and/or include looped tracks (rather than an audio signal with a predefined length as in films), this is particularly helpful when adjusting the audio mix to prevent fatigue, as some audio signals may induce listening fatigue after different periods of time.

The game state information may comprise information of a current game state. For example, if the video game is currently in a combat state then the game state information may indicate that this is the case. Where the game state information comprises information of a current game state, it may also include a period of time that the video game has been in the current game state. In this way, the information of the current game state may be used to adjust the audio mix. For example, a high intensity game state will likely have an accompanying high intensity audio mix. If the current game state is a high intensity game state and the video game has been in this high intensity game state for an extended period of time (e.g. 5 minutes or more), it is likely to become fatiguing for the player and so the dynamic range of the audio mix should be adjusted to avoid this.

For example, when the period of time the audio mix has been playing is greater than a first time threshold and/or when the period of time that the video game has been in the current game state is greater than a second time threshold, the dynamic range of the audio mix may be adjusted. The first time threshold may be the same as or different to the second time threshold.

The game state information may comprise information of an upcoming game state. Depending on the video game application running, the upcoming game state may be known or predicted based on the state video game and input of the players. For example, in a scenario where the current game state is a combat state then an upcoming game state may be a dialogue or exploration game state. Where the game state information comprises information of an upcoming game state, it may also include a period of time until the video game enters the upcoming game state. This may also be known or predicted depending on the video game application running. In this way, the dynamic range of the audio mix may be adjusted in a manner which provides a smooth transition between the current game state and the upcoming game state, avoiding a jarring transition which may negatively affect the player's experience. This is particularly effective when the game state information comprises both the information of the current game state and the upcoming game state, as listener fatigue is avoided while ensuring a smooth audio transition and enhanced listening experience.

Optionally, adjusting the dynamic range may comprise applying a compressor or an expander with an attack time and/or a release time of at least 5 seconds. Preferably, the attack and/or release time is from 5 to 20 seconds, from 2 to 3 minutes, or from 5 seconds to 10 minutes. In this way, the dynamic range of the audio mix is compressed (or expanded) very slowly, particularly when compared to typical attack and release times used during compression (or expansion). This has been found to be particularly effective at reducing listener fatigue without negatively impacting the player's engagement with the video game. The attack and/or release time may be applied uniformly to all adjusted audio signals, or different audio signals may be adjusted at different rates. For example, a particularly loud audio bus may be downwardly compressed with a first attack time which is shorter than a second attack time used in the compression of other quieter audio signals in the audio mix.

Adjusting the dynamic range of the audio mix may comprise applying downwards compression, for example to reduce the volume of the audio mix where the mix (or an audio signal of the mix) has been too loud for too long, or may comprise applying upwards compression, for example to increase the volume of the audio mix where the mix (or an audio signal of the mix) has been too quiet for too long.

Adjusting the dynamic range of the audio mix may comprise applying downwards expansion or upwards expansion to the audio mix. Expansion of the dynamic range is particularly beneficial when emphasis on a louder part(s) of the audio mix is desired, or where it is desired to reduce the impact of a quieter part(s) of the audio mix. Downwards expansion is typically performed in such cases when the volume is high and further increase may lead to listener fatigue, while upwards expansion is typically performed when the volume of the audio mix is lower (for example after the audio mix has been compressed).

Upwards and downwards compression may be used in combination with each other, for example by bringing louder parts of the audio mix down closer to the average and by boosting quieter parts of the audio mix closer to the average. Similarly, upwards and downwards expansion may also be used in combination with each other, and/or with upwards and downwards compression.

After the dynamic range of the audio mix has been adjusted, the method may further comprise releasing the dynamic range of the audio mix. Releasing the dynamic range of the audio mix refers to adjusting the dynamic range to return it to the values of before the dynamic range was adjusted based on the game state information and the audio mix information. This adjustment may be performed by stopping applying a system or filter which was being applied to the audio mix to adjust the dynamic range (i.e. releasing the system, filter, or previously applied adjustments). In this way, the dynamic range of the audio mix is adjusted to prevent player fatigue and returned to the default dynamic range intended for the video game.

In some examples, all audio signals of the audio mix are released while in other examples this is not the case and at least one audio signal may remain with its adjusted dynamic range.

Releasing the audio mix may be an instant release where the dynamic range is instantly returned to original levels, or a progressive release where the dynamic range is gradually returned to the original levels. An instant release or a progressive release will be more appropriate in different situations.

Optionally, the dynamic range of the audio mix is released when an amplitude of the audio mix passes a threshold amplitude. Typically the threshold amplitude is a ceiling threshold and so the dynamic range of the audio mix is released when the amplitude reaches or exceeds the threshold, alternatively the threshold amplitude may be a floor threshold and so the dynamic range of the audio mix is released when the amplitude drops to or goes below the threshold.

Optionally, the method may further comprise obtaining second game state information; and wherein releasing the dynamic range of the audio mix comprises releasing the dynamic range of the audio mix based on the second game state information. For example basing the releasing of the dynamic range on the second game state information may help to determine whether the dynamic range should be instantly released or progressively released, and if progressively released then the period of time over which the dynamic range should be progressively released.

The second game state information may comprise information of a current game state (at a later point in time to the current game state referenced above in relation to the game state information).

Alternatively, the second game state information may comprise information of an upcoming game state. In this way, the dynamic range of the audio mix may be returned to its original levels before the upcoming game state begins. When the second game state information comprises information of an upcoming game state, the step of obtaining the second game state information may be performed before or after adjusting the dynamic range of the audio mix based on the game state information and the audio mix information.

According to a second aspect, there is provided a system for adjusting an audio mix of a video game, wherein the system is configured to perform a method according to the first aspect. Preferably the system is a video game system.

According to a third aspect, there is provided a computer program comprising computer-readable instructions which, when executed by one or more processors, cause the one or more processors to perform a method according to the first aspect.

According to a fourth aspect, there is provided a non-transitory storage medium storing computer-readable instructions which, when executed by one or more processors, cause the one or more processors to perform a method according to the first aspect.

According to a fifth aspect, there is provided a system for adjusting an audio mix of a video game, wherein the system comprises: an obtaining module configured to: obtain an audio mix of a video game, wherein the audio mix comprises at least one audio signal; obtain game state information; and obtain audio mix information, wherein the audio mix information comprises a dynamic range of the audio mix; the system further comprising an adjusting module configured to adjust the dynamic range of the audio mix based on the game state information and the audio mix information.

Optionally, in embodiments of the fifth aspect the system may be a video game system.

It will be appreciated that embodiments and advantages of the first aspect are also applicable to the fifth aspect. For example, the system may further comprise an analysing module configured to analyse the audio mix to determine the dynamic range of the audio mix.

### BRIEF DESCRIPTION OF DRAWINGS

Examples of the present invention are described below, by way of example only, with reference to the accompanying drawings, in which:
Figure 1 is a flowchart illustrating a method for adjusting an audio mix of a video game, according to an example; and
Figure 2 shows in schematic form a system that is suitable for adjusting an audio mix of a video game, according to an example.

### DETAILED DESCRIPTION

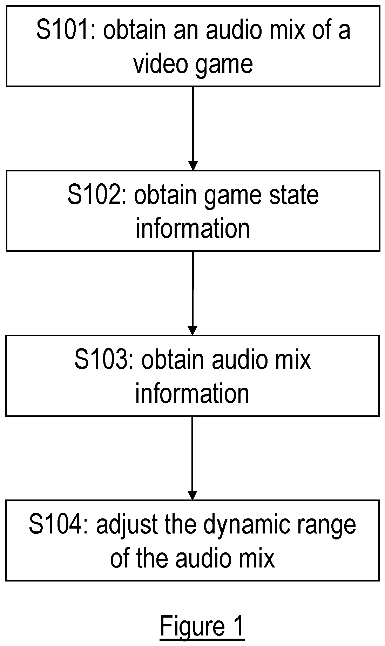

Figure 1 sets out a method for adjusting an audio mix of a video game according to an example.

In step S101, an audio mix of a video game is obtained. The audio mix could be obtained from a local storage component or remotely from external storage.

The audio is the audio output by the video game system and heard by a listener as the game is played. The audio mix will vary depending on various factors such as the video game which is being played, the game state of that video game (e.g. what the player is doing in the game), and personalised settings set by the player (such as muting in-game music). The mix comprises at least one audio signal such as an audio element or an audio bus comprising a plurality of audio elements.

In step S102, game state information is obtained. Game state information refers to information about the state of the video game currently running and may be used to determine whether the dynamic range of the audio mix is appropriate for the game state and adjust the dynamic range accordingly.

In a first example, the game state information may indicate that the player character (i.e. the virtual in-game character controlled by the player) is in a combat state, that the health of the player character is low, and how long the video game has been in the combat state. In a second example of the same video game as the first example, the game state information may indicate that the player character is in a dialogue state and that they are predicted to enter a combat state in a period of time.

It will be appreciated that game state information is not limited to the above examples and may include other information such as historic game data from the player (such as their previous inputs) and other players. For example, high frequency input of several different input elements suggests the player is in a higher intensity game state, while lower frequency input of a small number of input elements suggests the player is in a lower intensity game state.

In step S103, audio mix information is obtained. The audio mix information comprises a dynamic range of the audio mix, either of the mix as a whole or at least one audio signal of the audio mix. This audio mix information may be information obtained from storage (at the same time or separately to obtaining the audio mix), such as metadata or other identification information associated with the audio mix. Alternatively, the audio mix information may be obtained by analysing the audio mix itself, for example by analysing the waveform of the audio mix or at least one audio signal of the mix.

In addition to the dynamic range of the audio mix, the audio mix information may comprise other information such as context information of the audio mix or a period of time which an audio signal of the audio mix has been playing. Continuing with the first example described in the previous step, the audio context information may indicate that the audio mix comprises music and combat sound effect audio signals, and that the intensity of these signals is high. In this example, the audio mix information indicates that the audio mix may become fatiguing for a listener if continually played with high dynamic range.

In step S104, the dynamic range of the audio mix is adjusted based on the game state information and the audio mix information. That is, in order to avoid listener fatigue while still ensuring a best possible audio experience for the player, the degree of adjustment and manner of adjustment of the dynamic range of the audio mix will be determined using the game state information and the current dynamic range of the audio mix (along with other relevant elements of the audio mix information).

Continuing with the first example described above, the dynamic range of the audio mix is of a level that would be fatiguing for a listener after an extended period of time. This is confirmed by other elements of the audio mix information, such as the audio context information which indicates that the intensity of audio signals in the audio mix is high. The obtained game state information indicates that the player character is in a combat state in the game and has been for over five minutes.

In one scenario, the dynamic range of the entire audio mix is downwardly compressed equally. In another scenario, the audio signals in the audio mix corresponding to the music are downwardly compressed by a first amount and the audio signals corresponding to the combat sound effects are downwardly compressed to a lesser extend (i.e. by a second amount less than the first amount). In video games, music audio signals typically play continuously while sound effect audio signals are often brief and irregular, therefore adjusting the dynamic range of the audio mix in this way prevents listener fatigue from the music and sound effects while ensuring important audio cues in the combat sound effects can still be clearly heard.

Continuing with the second example described above, in the current dialogue state the dynamic range of the audio mix is of a lower level which is not fatiguing for the listener, and that could be boosted to improve the audio experience for the player. This is confirmed by other elements of the audio mix information, such as audio context information which indicates that the intensity of the audio mix is low. The obtained game state information indicates that the game is in the dialogue state and that it is predicted to enter a combat state in around two minutes time. In some scenarios, adjusting the dynamic range of the audio mix may mean the dynamic range of the audio mix is upwardly compressed to boost quieter levels of the mix, in other scenarios the dynamic range of the audio mix might be upwardly expanded to further emphasise louder levels of the mix.

To ensure that listening to the audio mix is still an immersive and enjoyable experience for the player, the adjustments to the dynamic range of the audio mix are applied very slowly relative to how dynamic range adjustments are typically applied in the audio field, with the magnitude of adjustment preferably being as low as possible. For example, the attack and releases in a compressor or expander applied to the audio mix may be uncommonly long (e.g. of 5 seconds or more, 20 seconds or more, 2 minutes or more) when compared to typical compressors or expanders in the field. Typically, the magnitude of adjustment is from 1 dB to 3 dB, however in some scenarios where the mix is more dynamic then a greater magnitude of adjustment such as 6 dB or 10 dB may be applied.

Optionally, the dynamic range of the audio mix is released after it has been adjusted. Continuing with the second example above for context, the information that the game is predicted to enter a combat game state is information on an upcoming game state and, in this case, second game state information. As the dynamic range of the audio mix was adjusted during the dialogue state, by upwards compression or upwards expansion, the levels of the audio mix have been boosted. This means when the game changes from the dialogue state to the combat state, the audio levels in the combat state may suddenly be too loud for the listener or may result in audio signal(s) of the later audio mix becoming undesirably distorted. To prevent this, the dynamic range of the audio mix may be released.

The releasing may be based on a threshold amplitude, such that when amplitude of the audio mix passes the threshold amplitude the dynamic range of the audio mix is released. The threshold amplitude may be the same for all players or may be personalised for an individual player based on their preferences. Releasing the dynamic range may be instant or progressive, and may comprise releasing all audio signals of the audio mix or just one or more specific audio signals of the mix. The releasing may be an instant releasing or a progressive releasing where the dynamic range is gradually released over an extended period of time. The period of time over which the dynamic range is released is not limited and may vary. For example, the period of time may be 10 seconds, 30 seconds, 1 minute, or 5 minutes. Typically, when releasing the dynamic range comprises boosting quieter levels of the mix the period of time is shorter in order to capture the player's attention. When releasing the dynamic range comprises brining down louder levels of the mix the period of time is typically longer in order to avoid jarring the player. Optionally, the period of time may be determined based on the magnitude of the adjustment of the dynamic range performed in the releasing, for example with releases with larger adjustments being performed over a shorter period of time.

Alternatively to the threshold amplitude, or in combination, the dynamic range may be released based on the second game state information. For example, the second game state information may be to used to determine when and how to release the dynamic range.

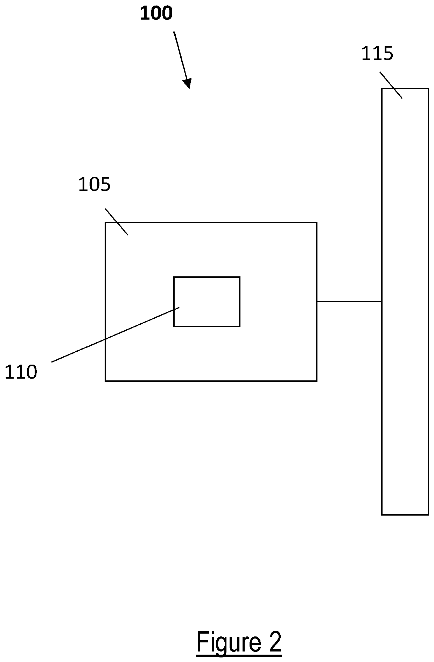

Referring to Figure 2, an exemplary system 100 in which the invention may operate is shown. The setup of Figure 2 is shown purely to illustrate the invention in context and is not in any way limiting on the scope of the invention.

System 100 includes a computing device 105 that comprises an audio processing unit 110. In the illustrated example the computing device 105 is a game console. The game console can be of any type known or developed in future. The audio processing unit 110 can be any type of processor capable of performing the invention.

Computing device 105 is communicatively coupled to a display device 115, in this case a television. The coupling can be wired or wireless and may involve an intermediate network, e.g. the internet or a local area network. Computing device 105 is configured to execute software code to enable a user to experience a virtual environment, in this particular example a game environment where the user is a player. Audio processing unit 110 can interact with computing device 105 to obtain information about the virtual environment. For example, audio processing unit 110 may request information about the contents of a virtual environment such as the game state and the audio mix of the virtual environment, the types, names and/or locations of virtual objects, non-player characters (NPCs) and/or avatars. Here, a 'type' is understood to refer to a category or class of item, e.g. object, NPC, avatar, etc. In the case of augmented reality, audio processing unit 110 may request the same information in relation to the virtual environment or the real-world environment. Computing device 105 may provide information about the contents of a selected portion of a virtual environment, e.g. the contents of a virtual environment that is currently within a field of view of a user avatar.

The audio processing unit 110 can be configured to carry out the method of Figure 1, e.g. through the execution of computer code or other such machine-readable instructions that may be stored on a machine-readable storage medium.

The machine-readable storage medium may be a non-transitory machine-readable storage medium.

Many different arrangements are possible and the invention is not limited to the specific arrangement of hardware shown in Figure 2. For example, in alternative embodiments, the components of Figure 2 could be replaced by any combination of the following:
Computing device 105 could alternatively be a virtual assistant module, a cloud-based computing resource, a laptop, a desktop computer, a tablet computer, a mobile phone, an in-vehicle computation unit, and the like.

Display device 115 could alternatively be a virtual reality headset worn by user, a display of a laptop, a display of a tablet computer, a display of a desktop computer, a display of a mobile phone, a holographic projector, an in-vehicle display such as a satellite navigation system display, a cinema screen, etc.

In some cases the virtual environment does not have a visual component and in this case display device 115 can be omitted entirely. Examples include an audio-only augmented reality environment, e.g. as may be generated by a virtual assistant.

Having described aspects of the disclosure in detail, it will be apparent that modifications and variations are possible without departing from the scope of aspects of the disclosure as defined in the appended claims. As various changes could be made in the above methods and products without departing from the scope of aspects of the disclosure, it is intended that all matter contained in the above description and shown in the accompanying drawings shall be interpreted as illustrative and not in a limiting sense.

## Claims

1. A method for adjusting an audio mix of a video game, the method comprising:
obtaining an audio mix of a video game, wherein the audio mix comprises at least one audio signal;
obtaining game state information;
obtaining audio mix information, wherein the audio mix information comprises a dynamic range of the audio mix; and
adjusting the dynamic range of the audio mix based on the game state information and the audio mix information.

2. The method of claim 1, wherein the audio signal is an audio element;
wherein the audio mix information comprises a dynamic range of the audio element; and
wherein adjusting the dynamic range of the audio mix comprises adjusting the dynamic range of the audio element.

3. The method of any preceding claim, wherein the audio signal is an audio bus, the audio bus comprising a plurality of audio elements;
wherein the audio mix information comprises a dynamic range of the audio bus; and
wherein adjusting the dynamic range of the audio mix comprises adjusting the dynamic range of the audio bus.

4. The method of any preceding claim, wherein the audio mix comprises M audio signals, where M is an integer greater than 1; and
wherein adjusting the dynamic range of the audio mix comprises selecting N audio signals, wherein N is an integer from 1 to M-1, and adjusting the selected audio signals.

5. The method of any preceding claim, wherein obtaining the audio mix information comprises analysing the audio mix to determine the dynamic range of the audio mix.

6. The method of any preceding claim, wherein the audio mix information further comprises audio context information of the audio mix.

7. The method of any preceding claim, wherein the audio mix information further comprises a period of time the audio mix has been playing.

8. The method of any preceding claim, wherein the game state information comprises information of a current game state and, optionally, a period of time the video game has been in the current game state.

9. The method of any preceding claim, wherein the game state information comprises information of an upcoming game state; and
wherein the dynamic range of the audio mix is adjusted in preparation for the upcoming game state; and
optionally, the game state information comprises a period of time until the video game enters the upcoming game state.

10. The method of any preceding claim, wherein adjusting the dynamic range of the audio mix comprises applying downwards compression to the audio mix and/or applying upwards compression to the audio mix.

11. The method of any preceding claim, wherein adjusting dynamic range of the audio mix comprises applying upwards expansion to the audio mix and/or applying downwards expansion to the audio mix.

12. The method of any preceding claim, wherein adjusting the dynamic range of the audio mix comprises applying downwards expansion to the audio mix.

13. The method of any preceding claim, further comprising: after adjusting the dynamic range of the audio mix, releasing the dynamic range of the audio mix; and
optionally, wherein the dynamic range of the audio mix is released when an amplitude of the audio mix passes a threshold amplitude.

14. The method of claim 13, further comprising obtaining second game state information; and
wherein releasing the dynamic range of the audio mix comprises releasing the dynamic range of the audio mix based on the second game state information.

15. A system for adjusting an audio mix of a video game, wherein the system comprises:
an obtaining module configured to:
obtain an audio mix of a video game, wherein the audio mix comprises at least one audio signal;
obtain game state information; and
obtain audio mix information, wherein the audio mix information comprises a dynamic range of the audio mix;
the system further comprising an adjusting module configured to adjust the dynamic range of the audio mix based on the game state information and the audio mix information.
